# EUROPEAN PATENT SPECIFICATION

(11) **EP 3 919 453 B1**
(45) Date of publication and mention of the grant of the patent: **01.01.2025**
(21) Application number: 19913506.2
(22) Date of filing: 19.07.2019
(51) Int. Cl.: C03B 37/025, C03B 37/012

(54) **MANUFACTURING METHOD FOR RADIATION-RESISTANT OPTICAL FIBER**
HERSTELLUNGSVERFAHREN FÜR STRAHLUNGSBESTÄNDIGE GLASFASER
PROCÉDÉ DE FABRICATION DE FIBRE OPTIQUE RÉSISTANTE AUX RAYONNEMENTS

(30) Priority: 31.01.2019 CN 201910101344
(43) Date of publication of application: 08.12.2021
(73) Proprietor: Fiberhome Telecommunication Technologies Co., Ltd, Wuhan, Hubei 430000 (CN); Fiberhome Fujikura Optic Technology Co., Ltd, Wuhan, Hubei 430074 (CN)
(72) Inventor: ZHANG, Yichi, Wuhan, Hubei 430000 (CN); YU, Huang, Wuhan, Hubei 430000 (CN); LUO, Cheng, Wuhan, Hubei 430000 (CN); ZHU, Wei, Wuhan, Hubei 430000 (CN); CHEN, Liming, Wuhan, Hubei 430000 (CN); LIU, Cheng, Wuhan, Hubei 430000 (CN); HE, Maoyou, Wuhan, Hubei 430000 (CN); QIAN, Feng, Wuhan, Hubei 430000 (CN)
(74) Representative: Harrison, Michael Robert
(86) International application number: PCT/CN2019/096656
(87) International publication number: WO 2020/155579

(56) References cited:
- EP-A2- 0 943 936
- EP-A2- 2 332 892
- WO-A1-98/57203
- CN-A- 103 319 085
- CN-A- 109 574 491
- JP-A- 2000 226 223

## Description

### Field of the Invention

The invention relates to the field of optical fiber manufacturing, in particular to a manufacturing method for a radiation-resistant optical fiber.

### Background of the Invention

With the continuous development of modern communication technology, communication equipment used under special environmental conditions requires higher data transmission volume and transmission speed. In the fields of aerospace, nuclear power engineering, medical equipment, etc., due to the existence or use of radioactive sources/high-energy particle rays, strict requirements have been put forward for communication medium (especially optical fiber cable itself). In an irradiation condition, an irradiation ray that mainly threatens communication equipment and the communication optical fiber is a γ-ray. Free electrons and holes are generated from the quartz material of the main body of the optical fiber in the irradiation environment under the action of the γ-ray, and are captured by oppositely charged defect centers to form a "color center", which produces additional optical absorption peaks in multiple bands. The absorption peaks caused by radiation cause the attenuation of optical signals in the optical fiber to increase, and the absorption peaks near the communication band have a particularly significant impact on the attenuation of the optical fiber.

The optical fiber manufacturing process involves rapid switching of the temperature field of thousands of degrees Celsius, which will introduce a large number of material defects. These defects are the main source of the "color center" induced by radiation rays, so how to control the material defects in the optical fiber is the key to improve the radiation resistance of the optical fiber. Patent application CN2016102090177 and patent application CN2013105526038 disclose a method for improving radiation-resistance performance of an optical fiber through doping a fluorine element in the quartz material of an optical fiber. The fluorine element itself plays a role of "ring-opening" in a quartz glass network structure, which can reduce the number of Si-O five-membered rings and four-membered rings and transform into two-membered or three-membered ring structures. In combination with the characteristics of non-doped Ge element in the optical fiber, the number of the material defects can be reduced and the formation of the irradiated "color center" can be suppressed. However, this technical method requires the use of high-concentration fluorine doping technology, and the low solubility of the fluorine element in quartz matrix and the instability of the Si-O-F series products make this method relatively complex, which may require a modified chemical vapor deposition (MCVD) technology or a plasma-assisted chemical vapor deposition (PCVD) technology combined with advanced fluorine doping control technology to achieve. Similarly, due to the characteristics of the above-mentioned fluorine element, this method is severely limited in the preparation of the optical fiber with a higher numerical aperture. Patent application CN2013102184359 discloses a method for improving radiation-resistance performance of an optical fiber by using a heat treatment technique and a pre-irradiation technique. The heat treatment technology, long-term heat preservation in a temperature zone near a glass fictive temperature, utilizes a thermal effect to eliminate the material defects in the quartz matrix so as to achieve the purpose of reducing the formation of the "color center". The pre-irradiation technique utilizes the effect of γ-rays and unstable lattice points in the optical fiber, although the inherent loss of the optical fiber will be slightly increased, the purpose of eliminating the material defects can also be achieved. This method is mainly applicable to the optical fiber with short length, while the longer optical fiber cannot use the method because it is difficult to ensure the strength of the optical fiber after removing the coating layer (polyacrylic acid-based coating layer is deformed and failed at a temperature higher than 130°C). In the process of fiber drawing, this method requires a long thermal annealing time (> 0.5h), which is not consistent with the actual equipment conditions of the optical fiber industrial production (conventional fiber drawing speed ranges from 50m/min to 2000m/min).

In view of the fact that the manufacturing of the existing radiation-resistant optical fiber requires the use of a complex deposition process and requires to manufacture a "pure silica core + fluorine-doped silica cladding" structure, which has a long manufacturing cycle and a complex process, and at the same time, the manufacturing process of the existing radiation-resistant optical fiber mainly involves the treatment for the optical fiber, which is difficult to ensure the strength of the optical fiber and does not consistent with the actual equipment conditions of the optical fiber industrial production, the current problem is the urgent need to research and develop a new method for manufacturing a radiation-resistant optical fiber.

JP2000226223A discloses a manufacturing method for a radiation-resistant optical fiber, comprising the following steps: irradiating electromagnetic waves to a perform for optical fibers and taking out of the preform for optical fibers to produce a glass defect; immersing the perform for optical fibers in the atmosphere which consists of hydrogen gas; irradiating electromagnetic waves again; drawing the preform for optical fibers so as to obtain the optical fibers for ultraviolet light transmission.

### Summary of the Invention

In view of the defects existing in the prior art, the purpose of the present invention is to provide a manufacturing method for a radiation-resistant optical fiber. The method of the present invention makes a prepared optical fiber have good radiation-resistance performance through sequentially performing annealing, hydrogen loading, and irradiation preprocessing on an optical fiber preform, which effectively solves the problem that the existing radiation-resistant optical fiber can only be manufactured through a vapor deposition process and a deep fluorine doping process. At the same time, the method of the present invention does not involve complex preform manufacturing equipment, the types of preforms are not limited, and the application range is wide.

To achieve the above purpose, the present invention provides a manufacturing method for a radiation-resistant optical fiber, comprising the following steps:
sequentially performing annealing, hydrogen loading, and irradiation preprocessing on an optical fiber preform; and
performing drawing on the preprocessed optical fiber preform, so as to manufacture a radiation-resistant single mode optical fiber or a radiation-resistant multimode optical fiber.

The method of annealing comprises: heating the optical fiber preform to a setting temperature T₁ and holding the temperature T₁ for a period of time ti, then cooling down the optical fiber preform according to a fixed annealing rate K₁, and natural cooling after reaching a target temperature T₂, so as to manufacture an annealed optical fiber preform.

The setting temperature T₁ ranges from 850°C to 1100°C, the holding time ti ranges from 1h to 6h, the annealing rate K₁ ranges from 0.5°C/min to 2.0°C/min, and the target temperature T₂ ranges from 720°C to 980°C.

On the basis of the above technical solution, the setting temperature T₁ ranges from 870°C to 1050°C, the holding time ti ranges from 2h to 6h, the annealing rate K₁ ranges from 0.7°C/min to 1.5°C/min, and the target temperature T₂ ranges from 740°C to 940°C.

On the basis of the above technical solution, the method of hydrogen loading comprises: placing the annealed optical fiber preform in a hydrogen atmosphere for performing the hydrogen loading processing, so as to manufacture a hydrogen-loaded optical fiber preform.

On the basis of the above technical solution, the pressure of the hydrogen ranges from 0.5MPa to 2.0MPa, the concentration of the hydrogen is greater than 99v%, and the time for the hydrogen loading processing ranges from 1h to 24h.

On the basis of the above technical solution, the pressure of the hydrogen ranges from 0.8MPa to 1.5MPa, the concentration of the hydrogen is greater than 99v%, and the time for the hydrogen loading processing ranges from 4h to 12h.

On the basis of the above technical solution, the method of irradiation comprises: using a γ-ray source to perform the irradiation processing on the hydrogen-loaded optical fiber preform, so as to manufacture a irradiated optical fiber preform.

On the basis of the above technical solution, the irradiation processing is performed under the conditions of a radiation dose rate of 10Gy/h-200Gy/h and a total radiation dose of 0.4kGy-2.0kGy.

On the basis of the above technical solution, in an environment where the total radiation dose is 10Gy, the attenuation of the single mode optical fiber both at 1300nm wave band and at 1550nm wave band does not exceed 0.5dB/km; and the attenuation of the multimode optical fiber at 1300nm wave band does not exceed 0.6dB/km; in an environment where the total radiation dose is 10kGy, the attenuation of the single mode optical fiber both at 1300nm wave band and at 1550 nm wave band does not exceed 4.0dB/100m; and the attenuation of the multimode optical fiber at 1300nm wave band does not exceed 6.0dB/100m.

Compared with the prior art, the present invention has the following advantages:
(1) The manufacturing method for the radiation-resistant optical fiber provided by the present invention, which sequentially performs annealing, hydrogen loading, and irradiation preprocessing on the optical fiber preform, and then performs drawing on the preprocessed optical fiber preform, is beneficial to completely eliminate material defects in quartz glass, inhibit the uneven stress distribution in the optical fiber preform, and reduce the attenuation of the drawn optical fiber; moreover, can effectively reduce the irradiation sensitivity of the optical fiber, and is helpful for achieving fast manufacturing of the radiation-resistant optical fiber. In addition, the manufacturing method for the radiation-resistant optical fiber provided by the present invention further can overall improve the radiation-resistant level of the drawn optical fiber, and is helpful for achieving the mass manufacturing of the radiation-resistant optical fiber.
(2) The manufacturing method for the radiation-resistant optical fiber provided by the present invention does not involve complex preform manufacturing equipment, the types of preforms to be treated are not limited and can be single mode optical fiber preforms, multimode optical fiber preforms or other special optical fiber preforms. Therefore, the manufacturing method for the radiation-resistant optical fiber provided by the present invention has a wide application range, and the source of the preforms can cover various manufacturing technologies such as PCVD, MCVD, and OVD.

### Description of the Drawings

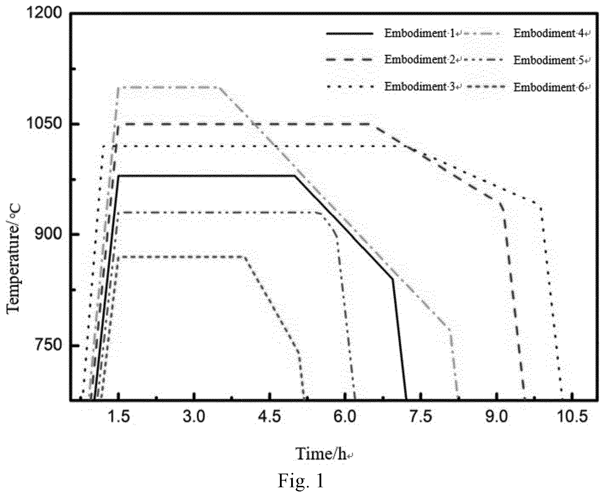

Fig. 1 shows a schematic flow of an annealing method in the embodiment of the present invention.

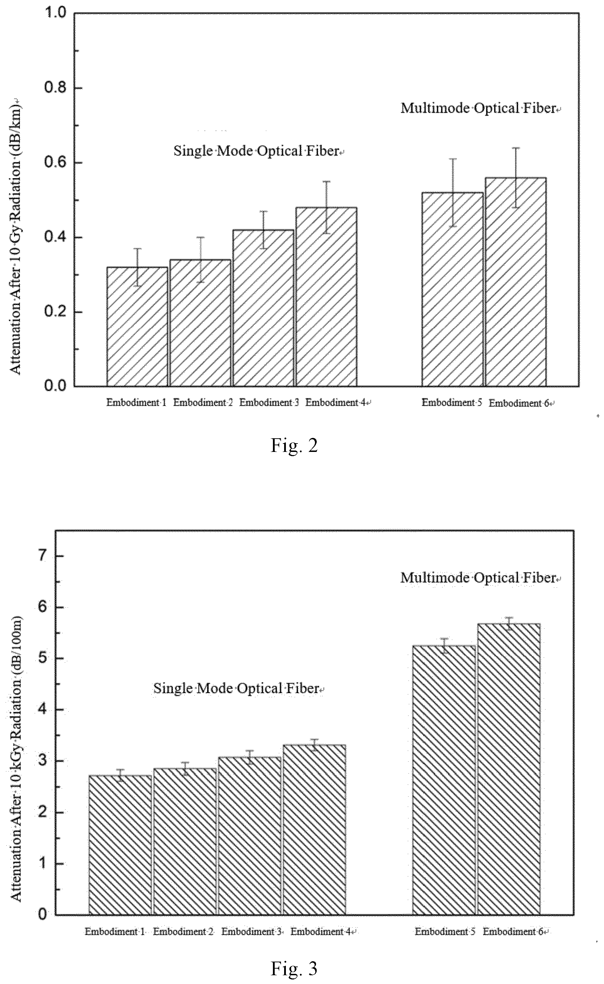

Fig. 2 shows an attenuation (dB/km) level of a radiation-resistant optical fiber manufactured in the embodiment of the present invention at a radiation dose of 10Gy at 1300nm wave band.
Fig. 3 shows an attenuation (dB/100m) level of a radiation-resistant optical fiber manufactured in the embodiment of the present invention at a radiation dose of 10kGy at 1300nm wave band.

### Detailed Description of the Embodiments

For easier understanding, the present invention will be further described below in detail with reference to the drawings in combination with the embodiments. It should be understood that these embodiments are illustrative only and are not intended to limit the present invention.

In order to facilitate understanding of the present invention, first technical terms involved in the present invention are defined as follows.

The term "single mode optical fiber" refers to an optical fiber that only transmits one mode of optical signal within an optical fiber core.

The term "multimode optical fiber" refers to an optical fiber that simultaneously transmits multiple modes of optical signals within an optical fiber core.

The single mode optical fibers involved in the present invention are a G.652 optical fiber (non-dispersion shifted single mode optical fiber), a G.654 optical fiber (cut-off wavelength shifted single mode optical fiber), a G.655 optical fiber (non-zero dispersion shifted single mode optical fiber) and a G.657 optical fiber (bending-insensitive single mode optical fiber) defined by the International Telecommunication Union Telecommunications Standards Branch (ITU-T).

The multimode optical fibers involved in the present invention are A1a and A1b multimode fibers defined by the International Electrotechnical Commission (IEC), which are respectively referred to as 50/125 multimode fibers (a multimode fiber with a core diameter of 50µm and a cladding diameter of 125µm) and 62.5/125 multimode fiber (a multimode fiber with a core diameter of 62.5µm and a cladding diameter of 125µm).

As mentioned above, the manufacturing of existing radiation-resistant optical fiber requires a complex deposition process and requires to manufacture a structure of "pure silica (quartz) core + fluorine-doped silica (quartz) cladding", which has a long manufacturing cycle and a complex process; at the same time, the manufacturing process of existing radiation-resistant optical fiber mainly involves the handling of the optical fiber, which is difficult to ensure the strength of the optical fiber and does not conform to the actual equipment conditions of the optical fiber industrial production. The inventor of the present invention has conducted a large number of experimental studies in the field of a radiation-resistant optical fiber manufacturing and found that the method of sequentially performing annealing, hydrogen loading and irradiation preprocessing on an optical fiber preform, and then performing drawing thereon, can effectively improve the radiation-resistance performance of the manufactured optical fiber, and the manufacturing method is not limited by the types of the optical fiber preforms and can manufacture the radiation-resistant optical fiber simply, rapidly and on a mass scale.

Therefore, the embodiment of the present invention provides a manufacturing method for a radiation-resistant optical fiber, comprising the following steps:
S1. performing annealing on an optical fiber preform, so as to manufacture an annealed optical fiber preform;
S2, performing hydrogen loading on the annealed optical fiber preform, so as to manufacture a hydrogen-loaded optical fiber preform;
S3. performing irradiation on the hydrogen-loaded optical fiber preform, so as to manufacture a irradiated optical fiber preform;
S4. performing drawing on the irradiated optical fiber preform, so as to manufacture a radiation-resistant single mode optical fiber or a radiation-resistant multimode optical fiber.

The optical fiber preform to be processed in the method of the present invention is a commercial optical fiber preform, the main component of which is optical fiber-grade high-purity SiO₂ glass. It is easy to understand that in order to meet the requirements of the waveguide structure and the optical fiber performance, the core and the cladding material of the optical fiber preform used in the present invention may further comprise a certain concentration of doping elements, such as Ge, F, P, B or Al.

The diameter of the optical fiber preform used in the method of the present invention ranges from 15mm to 150mm and the length ranges from 100mm to 3000mm. The manufacturing process of the commercial optical fiber preform can be MCVD, PCVD, OVD or VAD. The commercial optical fiber preform can be either a single mode optical fiber preform or a multimode optical fiber preform.

The annealing method in step S1 of the present invention comprises: heating the optical fiber preform to a setting temperature T₁ and holding the temperature T₁ for a period of time ti, then cooling down the optical fiber preform according to a fixed annealing rate K₁, and natural cooling after reaching a target temperature T₂, so as to obtain an annealed optical fiber preform.

In the present invention the setting temperature T₁ ranges from 850°C to 1100°C, the holding time ti ranges from 1h to 6h, the annealing rate K₁ ranges from 0.5°C/min to 2.0°C/min, and the target temperature T₂ ranges from 720°C to 980°C.

Preferably, the setting temperature T₁ ranges from 870°C to 1050°C, the holding time ti ranges from 2h to 6h, the annealing rate K₁ ranges from 0.7°C/min to 1.5°C/min, and the target temperature T₂ ranges from 740°C to 940°C.

The annealing method of the present invention can adjust hypothetical temperature of quartz glass to change microstructure relaxation, so as to eliminate internal stress of quartz.

The inventor of the present invention has found that the conditions of annealing processing may affect the radiation-resistance performance of the resulting optical fiber. In the three steps of the annealing process, i.e., temperature rise/thermal insulation - annealing - cooling, the annealing is different from the thermal insulation, which cools down at a slower rate. Annealing equipment with poor temperature control accuracy (e.g., cooling rate of 5°C/min) will affect the annealing effect of the optical fiber preform, thereby eventually affecting the radiation-resistance performance of the resulting optical fiber.

The hydrogen loading method in step S2 of the present invention comprises: placing the annealed optical fiber preform in a hydrogen atmosphere for performing the hydrogen loading processing, so as to obtain a hydrogen-loaded optical fiber preform.

Preferably, the pressure of the hydrogen ranges from 0.5MPa to 2.0MPa, the concentration of the hydrogen is greater than 99v%, and the time for the hydrogen loading processing ranges from 1h to 24h.

Further preferably, the pressure of the hydrogen ranges from 0.8MPa to 1.5MPa, the concentration of the hydrogen is greater than 99v%, and the time for the hydrogen loading processing ranges from 4h to 12h.

The hydrogen loading method of the present invention can make hydrogen molecules enter the quartz glass structure in the form of Si-OH, although the Si-OH itself will increase the absorption of the optical fiber at 1383nm window, material defects such as non-bridging oxygen oxygen vacancies can be eliminated with a small amount of H entering SiO₂ network structure, which enhances the radiation-resistance level of the optical fiber.

The irradiation method in step S3 of the present invention comprises: using a γ-ray source to perform the irradiation processing on the hydrogen-loaded optical fiber preform, so as to obtain a irradiated optical fiber preform.

Preferably, the irradiation processing is performed under the conditions of a radiation dose rate of 10Gy/h-200Gy/h and a total radiation dose of 0.4kGy-2.0kGy.

Further preferably, the irradiation processing is performed under the conditions of a radiation dose rate of 10Gy/h-100Gy/h and a total radiation dose of 0.5kGy-1.5kGy.

The inventor of the present invention has found that in general, a higher radiation dose rate will cause irreversible material defects in the quartz matrix of the preform, and the absorption caused by these defects cannot be recovered even if the radiation source is removed. The environment where the radiation-resistant optical fibers are used is mostly long-term service conditions (0.5a~60a). The initial attenuation of the optical fiber must be strictly controlled when manufacturing the radiation-resistant optical fibers, therefore, the preform should not receive the radiation with an excessively high dose rate. On the other hand, the total radiation dose of the preform is positively related to the volume of the preform. The larger the preform, the greater the total radiation dose. Therefore, the irradiation method of the present invention further needs to strictly control the radiation dose rate of the optical fiber preform while controlling the total radiation dose of the optical fiber preform.

In step S4 of the present invention, a conventional method in the prior art can be used to draw the irradiated optical fiber preform into a radiation-resistant single mode optical fiber or a radiation-resistant multimode optical fiber.

The radiation-resistant optical fiber manufactured by the present invention has the following characteristics: in an environment where the total radiation dose is 10Gy, the attenuation of the single mode optical fiber both at 1300nm wave band and at 1550nm wave band does not exceed 0.5dB/km; and the attenuation of the multimode optical fiber at 1300nm wave band does not exceed 0.6dB/km; in an environment where the total radiation dose is 10kGy, the attenuation of the single mode optical fiber both at 1300nm wave band and at 1550nm wave band does not exceed 4.0dB/100m; and the attenuation of the multimode optical fiber at 1300nm wave band does not exceed 6.0dB/100m.

The present invention will be further described below in detail with reference to the drawings in combination with the embodiments.

### Embodiments

### Embodiment 1

A clean and complete commercial single mode optical fiber preform with a length of 1050mm and a diameter of 80mm is chosen, and then placed in a box type resistance furnace. First, heating the optical fiber preform to a setting temperature T₁ = 980 °C, after holding the temperature for a period time ti = 3.5 h, cooling down the optical fiber preform to a target temperature T₂=840°C at an annealing rate K₁ = 1.2°C/min. Then stopping heating the preform and naturally cooling it along with the furnace. The cooled optical fiber preform is placed in a hydrogen pressure tank with a hydrogen pressure of 1.0MPa, a hydrogen concentration of greater than 99v% and a hydrogen loading time of 12h. After the hydrogen loading, the optical fiber preform is placed in an irradiation facility at room temperature and air environment for performing a γ-ray irradiation. The radiation dose rate is 50Gy/h and the total radiation dose is 1.70kGy. After finishing the above preprocessing to the optical fiber preform, the single mode optical fiber preform is finally drawn into a G.652 single mode optical fiber according to a conventional drawing process. The specific process and optical fiber indicators are shown in Table 1.

### Embodiment 2

A clean and complete commercial single mode optical fiber preform with a length of 700mm and a diameter of 72mm is chosen, and then placed in a box type resistance furnace. First, heating the optical fiber preform to a setting temperature T₁ = 1050 °C, after holding the temperature for a period time ti = 5h, cooling down the optical fiber preform to a target temperature T₂=940°C at an annealing rate K₁ = 0.7°C/min. Then stopping heating the preform and naturally cooling it along with the furnace. The cooled optical fiber preform is placed in a hydrogen pressure tank with a hydrogen pressure of 1.5MPa, a hydrogen concentration of greater than 99v% and a hydrogen loading time of 8h. After the hydrogen loading, the optical fiber preform is placed in an irradiation facility at room temperature and air environment for performing a γ-ray irradiation. The radiation dose rate is 85Gy/h and the total radiation dose is 1.25kGy. After finishing the above preprocessing to the optical fiber preform, the single mode optical fiber preform is finally drawn into a G.654 single mode optical fiber according to a conventional drawing process. The specific process and optical fiber indicators are shown in Table 1.

### Embodiment 3

A clean and complete commercial single mode optical fiber preform with a length of 600mm and a diameter of 65mm is chosen, and then placed in a box type resistance furnace. First, heating the optical fiber preform to a setting temperature T₁ = 1020 °C, after holding the temperature for a period time ti = 6h, cooling down the optical fiber preform to a target temperature T₂=940°C at an annealing rate K₁ = 0.5°C/min. Then stopping heating the preform and naturally cooling it along with the furnace. The cooled optical fiber preform is placed in a hydrogen pressure tank with a hydrogen pressure of 0.8MPa, a hydrogen concentration of greater than 99v% and a hydrogen loading time of 6h. After the hydrogen loading, the optical fiber preform is placed in an irradiation facility at room temperature and air environment for performing a γ-ray irradiation. The radiation dose rate is 70Gy/h and the total radiation dose is 1.05kGy. After finishing the above preprocessing to the optical fiber preform, the single mode optical fiber preform is finally drawn into a G.655 single mode optical fiber according to a conventional drawing process. The specific process and optical fiber indicators are shown in Table 1.

### Embodiment 4

A clean and complete commercial single mode optical fiber preform with a length of 1300mm and a diameter of 60mm is chosen, and then placed in a box type resistance furnace. First, heating the optical fiber preform to a setting temperature T₁ = 1100 °C, after holding the temperature for a period time ti = 2h, cooling down the optical fiber preform to a target temperature T₂=770°C at an annealing rate K₁ = 1.2°C/min. Then stopping heating the preform and naturally cooling it along with the furnace. The cooled optical fiber preform is placed in a hydrogen pressure tank with a hydrogen pressure of 1.0MPa, a hydrogen concentration of greater than 99v% and a hydrogen loading time of 12h. After the hydrogen loading, the optical fiber preform is placed in an irradiation facility at room temperature and air environment for performing a γ-ray irradiation. The radiation dose rate is 50Gy/h and the total radiation dose is 1.35kGy. After finishing the above preprocessing to the optical fiber preform, the single mode optical fiber preform is finally drawn into a G.657 single mode optical fiber according to a conventional drawing process. The specific process and optical fiber indicators are shown in Table 1.

### Embodiment 5

A clean and complete commercial 50/125 multimode optical fiber preform with a length of 780mm and a diameter of 34.5mm is chosen, and then placed in a box type resistance furnace. First, heating the optical fiber preform to a setting temperature T₁ = 930 °C, after holding the temperature for a period time ti = 4h, cooling down the optical fiber preform to a target temperature T₂=900°C at an annealing rate K₁ = 1.5°C/min. Then stopping heating the preform and naturally cooling it along with the furnace. The cooled optical fiber preform is placed in a hydrogen pressure tank with a hydrogen pressure of 0.66MPa, a hydrogen concentration of greater than 99v% and a hydrogen loading time of 6h. After the hydrogen loading, the optical fiber preform is placed in an irradiation facility at room temperature and air environment for performing a γ-ray irradiation. The radiation dose rate is 33Gy/h and the total radiation dose is 0.62kGy. After finishing the above preprocessing to the optical fiber preform, the multimode optical fiber preform is finally drawn into a 50/125 multimode optical fiber according to a conventional drawing process. The specific process and optical fiber indicators are shown in Table 1.

### Embodiment 6

A clean and complete commercial 62.5/125 multimode optical fiber preform with a length of 620mm and a diameter of 32mm is chosen, and then placed in a box type resistance furnace. First, heating the optical fiber preform to a setting temperature T₁ = 870 °C, after holding the temperature for a period time ti = 2.5 h, cooling down the optical fiber preform to a target temperature T₂=740°C at an annealing rate K₁ = 2.0°C/min. Then stopping heating the preform and naturally cooling it along with the furnace. The cooled optical fiber preform is placed in a hydrogen pressure tank with a hydrogen pressure of 0.78MPa, a hydrogen concentration of greater than 99v% and a hydrogen loading time of 4h. After the hydrogen loading, the optical fiber preform is placed in an irradiation facility at room temperature and air environment for performing a γ-ray irradiation. The radiation dose rate is 14Gy/h and the total radiation dose is 0.47kGy. After finishing the above preprocessing to the optical fiber preform, the multimode optical fiber preform is finally drawn into a 62.5/125 multimode optical fiber according to a conventional drawing process. The specific process and optical fiber indicators are shown in Table 1. For comparison purposes, the attenuation results of the optical fibers of the existing radiation-resistant single mode optical fiber (available from FUJIKURA) and radiation-resistant multimode optical fiber (available from Draka) after 10Gy and 10kGy dose radiation are respectively shown in Table 2 below.

**Table 1 Specific Process and Optical Fiber Indicators of Embodiments 1-6 (pre-irradiation refers to irradiation in the preprocessing steps)**

| Embodiment No. | 1 | 2 | 3 | 4 | 5 | 6 |
|---|---|---|---|---|---|---|
| Type of Radiation-Resistant Optical Fiber | Single Mode Optical Fiber | Single Mode Optical Fiber | Single Mode Optical Fiber | Single Mode Optical Fiber | Multimode Optical Fiber 50/125 | Multimode Optical Fiber 62.5/125 |
| Setting Temperature T₁ (°C) | 980 | 1050 | 1020 | 1100 | 930 | 870 |
| Holding Time t₁(h) | 3.5 | 5 | 6 | 2 | 4 | 2.5 |
| Annealing Rate K₁ | 1.2 | 0.7 | 0.5 | 1.2 | 1.5 | 2.0 |
| (°C/min) | | | | | | |
| Target Temperature T₂ (°C) | 840 | 940 | 940 | 770 | 900 | 740 |
| Hydrogen Loading Pressure (MPa) | 1.0 | 1.5 | 0.8 | 1.0 | 0.66 | 0.78 |
| Time for Hydrogen Loading (h) | 12 | 8 | 6 | 12 | 6 | 4 |
| Radiation Dose Rate of Pre-irradiation (Gy/h) | 50 | 85 | 70 | 50 | 33 | 14 |
| Total Radiation Dose of Pre-irradiation (kGy) | 1.70 | 1.25 | 1.05 | 1.35 | 0.62 | 0.47 |
| Optical Fiber Attenuation After 10Gy Dose Radiation (dB/km) | 0.32/0.27 (1300nm / 1550nm) | 0.34/0.31 (1300nm/ 1550nm) | 0.42/0.39 (1300nm/ 1550nm) | 0.48/0.43 (1300nm/ 1550nm) | 0.52 (1300nm) | 0.56 (1300nm) |
| Optical Fiber Attenuation After 10kGy Dose Radiation (dB/100m) | 2.72/2.57 (1300nm/ 1550nm) | 2.85/2.69 (1300nm/ 1550nm) | 3.07/2.88 (1300 nm/ 1550nm) | 3.31/2.94 (1300nm/ 1550nm) | 5.25 (1300nm) | 5.68 (1300nm) |

**Table 2 Optical Indicators of Existing Radiation-Resistant Single Mode Optical Fiber and Multimode Optical Fiber**

| Type of Radiation-Resistant Optical Fiber | Single Mode Optical Fiber | Multimode Optical Fiber 50/125 | Multimode Optical Fiber 62.5/125 |
|---|---|---|---|
| Optical Fiber Attenuation After 10Gy Dose Radiation (dB/km) | 0.75/0.66 (1300nm/1550nm) | 0.68 (1300nm) | 0.76 (1300nm) |
| Optical Fiber Attenuation After 10kGy Dose Radiation (dB/100m) | 4.76/3.88 (1300nm/1550nm) | 7.7 (1300nm) | 8.3 (1300nm) |

By comparing the data in Table 1 and Table 2, it can be seen that the optical fiber attenuation of the radiation-resistant optical fiber provided by the present invention after 10Gy dose radiation and 10kGy dose radiation is smaller than that of the existing radiation-resistant optical fiber. Therefore, the radiation-resistant optical fiber provided by the present invention has good radiation-resistant performance.

The present invention is not limited to the above-mentioned embodiments. The contents that are not described in detail in the description belong to the prior art well known by one skilled in the art.

## Claims

1. A manufacturing method for a radiation-resistant optical fiber, comprising the following steps:
sequentially performing annealing, hydrogen loading, and irradiation preprocessing on an optical fiber preform; and
performing drawing on the preprocessed optical fiber preform, so as to manufacture a radiation-resistant single mode optical fiber or a radiation-resistant multimode optical fiber;
wherein the method of annealing comprises: heating the optical fiber preform to a setting temperature T₁ and holding the temperature T₁ for a period of time ti, then cooling down the optical fiber preform according to a fixed annealing rate K₁, and natural cooling after reaching a target temperature T₂, so as to manufacture an annealed optical fiber preform;
wherein the setting temperature T₁ ranges from 850°C to 1100°C, the holding time ti ranges from 1h to 6h, the annealing rate K₁ ranges from 0.5°C/min to 2.0°C/min, and the target temperature T₂ ranges from 720°C to 980°C.

2. The manufacturing method for a radiation-resistant optical fiber according to claim 1, wherein the setting temperature T₁ ranges from 870°C to 1050°C, the holding time ti ranges from 2h to 6h, the annealing rate K₁ ranges from 0.7°C/min to 1.5°C/min, and the target temperature T₂ ranges from 740°C to 940°C.

3. The manufacturing method for a radiation-resistant optical fiber according to
claim 1, wherein the method of hydrogen loading comprises: placing the annealed optical fiber preform in a hydrogen atmosphere for performing the hydrogen loading processing, so as to manufacture a hydrogen-loaded optical fiber preform.

4. The manufacturing method for a radiation-resistant optical fiber according to claim 3, wherein the pressure of the hydrogen ranges from 0.5MPa to 2.0MPa, the concentration of the hydrogen is greater than 99v%, and the time for the hydrogen loading processing ranges from 1h to 24h.

5. The manufacturing method for a radiation-resistant optical fiber according to claim 3, wherein the pressure of the hydrogen ranges from 0.8MPa to 1.5MPa, the concentration of the hydrogen is greater than 99v%, and the time for the hydrogen loading processing ranges from 4h to 12h.

6. The manufacturing method for a radiation-resistant optical fiber according to claim 1,
wherein the method of irradiation comprises: using a γ-ray source to perform the irradiation processing on the hydrogen-loaded optical fiber preform, so as to manufacture a irradiated optical fiber preform.

7. The manufacturing method for a radiation-resistant optical fiber according to claim 6,
wherein the irradiation processing is performed under the conditions of a radiation dose rate of 10Gy/h-200Gy/h and a total radiation dose of 0.4kGy-2.0kGy.

8. The manufacturing method for a radiation-resistant optical fiber according to claim 1, wherein
in an environment where the total radiation dose is 10Gy, the attenuation of the single mode optical fiber both at 1300nm wave band and at 1550nm wave band does not exceed 0.5dB/km; and the attenuation of the multimode optical fiber at 1300nm wave band does not exceed 0.6dB/km;
in an environment where the total radiation dose is 10kGy, the attenuation of the single mode optical fiber both at 1300nm wave band and at 1550nm wave band does not exceed 4.0dB/100m; and the attenuation of the multimode optical fiber at 1300nm wave band does not exceed 6.0dB/100m.

## Patentansprüche

1. Herstellungsverfahren für eine strahlungsbeständige Glasfaser, umfassend die folgenden Schritte:
sequentielles Durchführen von Glühen, Wasserstoffbeladen und Bestrahlungsvorverarbeiten an einer Glasfaservorform; und
Durchführen von Ziehen an der vorverarbeiteten Glasfaservorform, um eine strahlungsbeständige Einmodenglasfaser oder eine strahlungsbeständige Mehrmodenglasfaser herzustellen;
wobei das Verfahren des Glühens Folgendes umfasst: Erhitzen der Glasfaservorform auf eine Einstelltemperatur T₁ und Halten der Temperatur T₁ für einen Zeitraum t₁, dann Abkühlen der Glasfaservorform gemäß einer festen Glührate K₁ und natürliches Kühlen nach Erreichen einer Zieltemperatur T₂, um eine geglühte Glasfaservorform herzustellen;
wobei die Einstelltemperatur T₁ von 850 °C bis 1100 °C reicht, die Haltezeit t₁ von 1 h bis 6 h reicht, die Glührate K₁ von 0,5 °C/min bis 2,0 °C/min reicht und die Zieltemperatur T₂ von 720 °C bis 980 °C reicht.

2. Herstellungsverfahren für eine strahlungsbeständige Glasfaser nach Anspruch 1, wobei die Einstelltemperatur T₁ von 870 °C bis 1050 °C reicht, die Haltezeit t₁ von 2 h bis 6 h reicht, die Glührate K₁ von 0,7 °C/min bis 1,5 °C/min reicht und die Zieltemperatur T₂ von 740 °C bis 940 °C reicht.

3. Herstellungsverfahren für eine strahlungsbeständige Glasfaser nach Anspruch 1, wobei das Verfahren des Wasserstoffbeladens Folgendes umfasst: Platzieren der geglühten Glasfaservorform in einer Wasserstoffatmosphäre zum Durchführen des Wasserstoffbeladungsverarbeitens, um eine wasserstoffbeladene Glasfaservorform herzustellen.

4. Herstellungsverfahren für eine strahlungsbeständige Glasfaser nach Anspruch 3, wobei der Druck des Wasserstoffes von 0,5 MPa bis 2,0 MPa reicht, die Konzentration des Wasserstoffes größer als 99 Vol.-% ist und die Zeit für das Wasserstoffbeladungsverarbeiten von 1 h bis 24 h reicht.

5. Herstellungsverfahren für eine strahlungsbeständige Glasfaser nach Anspruch 3, wobei der Druck des Wasserstoffes von 0,8 MPa bis 1,5 MPa reicht, die Konzentration des Wasserstoffes größer als 99 Vol.-% ist und die Zeit für das Wasserstoffbeladungsverarbeiten von 4 h bis 12 h reicht.

6. Herstellungsverfahren für eine strahlungsbeständige Glasfaser nach Anspruch 1, wobei das Verfahren zur Bestrahlung Folgendes umfasst: Verwenden einer γ-Strahlenquelle, um das Bestrahlungsverarbeiten an der wasserstoffbeladenen Glasfaservorform durchzuführen, um eine bestrahlte Glasfaservorform herzustellen.

7. Herstellungsverfahren für eine strahlungsbeständige Glasfaser nach Anspruch 6, wobei das Bestrahlungsverarbeiten unter den Bedingungen einer Strahlungsdosisrate von 10 Gy/h-200 Gy/h und einer Gesamtstrahlungsdosis von 0,4 kGy-2,0 kGy durchgeführt wird.

8. Herstellungsverfahren für eine strahlungsbeständige Glasfaser nach Anspruch 1, wobei
in einer Umgebung, in der die Gesamtstrahlungsdosis 10 Gy ist, die Dämpfung der Einmodenglasfaser sowohl im Wellenband von 1300 nm als auch im Wellenband von 1550 nm 0,5 dB/km nicht überschreitet; und die Dämpfung der Mehrmodenglasfaser im Wellenband von 1300 nm 0,6 dB/km nicht überschreitet;
in einer Umgebung, in der die Gesamtstrahlungsdosis 10 kGy ist, die Dämpfung der Einmodenglasfaser sowohl im Wellenbereich von 1300 nm als auch im Wellenbereich von 1550 nm 4,0 dB/100 m nicht überschreitet; und die Dämpfung der Mehrmodenglasfaser im Wellenbereich von 1300 nm 6,0 dB/100 m nicht überschreitet.

## Revendications

1. Procédé de fabrication d'une fibre optique résistante aux rayonnements, comprenant les étapes suivantes :
réalisation de manière séquentielle d'un recuit, d'un chargement en hydrogène et d'un prétraitement par irradiation sur une préforme de fibre optique ; et
réalisation d'un étirage sur la préforme de fibre optique prétraitée, de manière à fabriquer une fibre optique monomode résistante aux rayonnements ou une fibre optique multimode résistante aux rayonnements ;
dans lequel le procédé de recuit comprend : la chauffe de la préforme de fibre optique à une température de prise T₁ et le maintien de la température T₁ pendant une période de temps ti, puis le refroidissement de la préforme de fibre optique selon une vitesse de recuit fixe K₁, et le refroidissement naturel après avoir atteint une température cible T₂, de manière à fabriquer une préforme de fibre optique recuite ;
dans lequel la température de prise T₁ est comprise entre 850° C et 1100° C, le temps de maintien t₁ est compris entre1 h et 6 h, la vitesse de recuit K₁ est comprise entre 0,5° C/min et 2,0° C/min, et la température cible T₂ est comprise entre 720° C et 980° C.

2. Procédé de fabrication d'une fibre optique résistante aux rayonnements selon la revendication 1, dans lequel la température de prise T₁ est comprise entre 870° C et 1050°C, le temps de maintien t₁ est compris entre 2 h et 6 h, la vitesse de recuit K₁ est comprise entre 0,7° C/min et 1,5° C/min, et la température cible T₂ est comprise entre 740° C et 940° C.

3. Procédé de fabrication d'une fibre optique résistante aux rayonnements selon la revendication 1, dans lequel le procédé de chargement en hydrogène comprend : le placement de la préforme de fibre optique recuite dans une atmosphère d'hydrogène pour effectuer le traitement de chargement en hydrogène, de manière à fabriquer une préforme de fibre optique chargée en hydrogène.

4. Procédé de fabrication d'une fibre optique résistante aux rayonnements selon la revendication 3, dans lequel la pression de l'hydrogène est comprise entre 0,5 MPa et 2,0 MPa, la concentration de l'hydrogène est supérieure à 99 v %, et le temps de traitement de chargement en hydrogène est compris entre 1 h et 24 h.

5. Procédé de fabrication d'une fibre optique résistante aux rayonnements selon la revendication 3, dans lequel la pression de l'hydrogène est comprise entre 0,8 MPa et 1,5 MPa, la concentration de l'hydrogène est supérieure à 99 v %, et le temps de traitement de chargement en hydrogène est compris entre 4 h et 12 h.

6. Procédé de fabrication d'une fibre optique résistante aux rayonnements selon la revendication 1, dans lequel le procédé d'irradiation comprend : l'utilisation d'une source de rayons y pour effectuer le traitement d'irradiation sur la préforme de fibre optique chargée en hydrogène, de manière à fabriquer une préforme de fibre optique irradiée.

7. Procédé de fabrication d'une fibre optique résistante aux rayonnements selon la revendication 6, dans lequel le traitement d'irradiation est effectué dans les conditions d'un débit de dose de rayonnement de 10 Gy/h à 200 Gy/h et d'une dose de rayonnement totale de 0,4 kGy à 2,0 kGy.

8. Procédé de fabrication d'une fibre optique résistante aux rayonnements selon la revendication 1, dans lequel
dans un environnement où la dose de rayonnement totale est de 10 Gy, l'atténuation de la fibre optique monomode à la fois dans la bande d'ondes de 1300 nm et dans la bande d'ondes de 1550 nm ne dépasse pas 0,5 dB/km ; et l'atténuation de la fibre optique multimode dans la bande d'ondes de 1300 nm ne dépasse pas 0,6 dB/km ;
dans un environnement où la dose totale de rayonnement est de 10 kGy, l'atténuation de la fibre optique monomode à la fois dans la bande d'ondes de 1300 nm et dans la bande d'ondes de 1550 nm ne dépasse pas 4,0 dB/100 m ; et l'atténuation de la fibre optique multimode dans la bande d'ondes de 1300 nm ne dépasse pas 6,0 dB/100 m.
